**Europäisches Patentamt**

**European Patent Office**

**Office européen des brevets**

(11) Veröffentlichungsnummer: **0 003 737**

**A1**

(12) # EUROPÄISCHE PATENTANMELDUNG

(21) Anmeldenummer: **78200389.1**

(22) Anmeldetag: **22.12.78**

(51) Int. Cl.²: **C 10 L 3/00**
C 07 C 1/20, C 07 C 9/04
//B01J23/74, C01B2/02

(30) Priorität: **16.02.78 DE 2806568**

(43) Veröffentlichungstag der Anmeldung:
**05.09.79 Patentblatt 79/18**

(84) Benannte Vertragsstaaten:
**CH DE FR SE**

(72) Erfinder: **Jockel, Heinz**
**Hauptstrasse 67**
**D-6087 Büttelborn(DE)**

(72) Erfinder: **Möller, Friedrich W., Dr.**
**Buchenweg 7**
**D-6382 Friedrichsdorf(DE)**

(72) Erfinder: **Renner, Hans J.**
**An den Bergen 30**
**D-6000 Frankfurt am Main 56(DE)**

(72) Erfinder: **Hölscher, Hans**
**Hügelweg 11**
**D-6051 Oberroden/Waldacker(DE)**

(71) Anmelder: **METALLGESELLSCHAFT AG**
**Reuterweg 14**
**D-6000 Frankfurt/M.1(DE)**

(74) Vertreter: **Fischer, Ernst, Dr.**
**Reuterweg 14**
**D-6000 Frankfurt am Main 1(DE)**

(54) Verfahren zur Erzeugung eines Heizgases durch katalytische Umsetzung von Methanol mit Wasserdampf.

(57) Verfahren zur Erzeugung eines methanhaltigen Heizgases durch Umsetzung von verdampftem Methanol mit Wasserdampf unter einem Druck von 10 bis 50 bar in mindestens einem Reaktor, der einen nickelhaltigen Katalysator enthält, bei Eintrittstemperaturen von 300 bis 500°C. Wasser und flüssiges Methanol werden im Gewichtsverhältnis von 0,5 bis 1,5 gemischt und das Gemisch erhitzt, verdampft und dem Reaktor als Einsatzmaterial zugeführt.

EP 0 003 737 A1

- 1 -

METALLGESELLSCHAFT
Aktiengesellschaft
Reuterweg 14
6000 Frankfurt/Main

Frankfurt/Main, 13.2.1978
WGN/HSZ

P 28 06 568.1

Verfahren zur Erzeugung eines Heizgases
durch katalytische Umsetzung von Methanol
mit Wasserdampf

Die Erfindung betrifft ein Verfahren zur Erzeugung eines methanhaltigen Heizgases durch Umsetzung von verdampftem Methanol mit Wasserdampf unter einem Druck von 10 bis 50 bar in mindestens einem Reaktor, der einen nickelhaltigen Katalysator enthält, bei Eintrittstemperaturen von 300 bis 500°C und Austrittstemperaturen des Produktgases von 500 bis 700°C. Die Anmeldung ist ein Zusatz zur Stammanmeldung P 26 41 113.2.

Der Einsatz von Methanol als alleiniges Ausgangsmaterial zur Erzeugung heizwertreichen Gases ist für eine Grundlastdeckung des hohen Methanolpreises wegen problematisch, wenn auch an sich möglich. Grundsätzlich ist aber Methanol für die Gaserzeugung gut geeignet, da es auf einfache Weise transportiert und gelagert werden kann. In einem Versorgungsnetz kommt es deshalb bevorzugt zur Deckung von Spitzenbedarf, z.B. im Winter, in Frage.

- 2 -

Der Erfindung liegt die Aufgabe zugrunde, das eingangs genannte Verfahren auf möglichst einfache und damit kostengünstige Weise durchzuführen. Erfindungsgemäß wird dies dadurch erreicht, daß Wasser und flüssiges Methanol im Gewichtsverhältnis von 0,5 bis 1,5 gemischt werden und das Gemisch erhitzt, verdampft und dem Reaktor als Einsatzmaterial zugeführt wird.

Die katalytische Umsetzung des Wasserdampf-Methanol-Gemisches im Reaktor erfolgt ohne Sauerstoffzugabe. Bevorzugt wird ein adiabtisch arbeitender Reaktor verwendet, doch kann dieser Reaktor auch Kühleinrichtungen aufweisen. Es ist z.B. möglich, das Einsatzgemisch im Reaktor zunächst in dessen Wandbereich ohne Katalysatorkontakt entlangzuführen und dann im Reaktor umzulenken und durch das Katalysatorbett zu leiten. Auf diese Weise führt das Einsatzgemisch zumindest einen Teil der bei der katalytischen Umsetzung frei werdenden Wärme ab.

Das entstehende Produktgas enthält einen Kohlenmonoxidanteil von üblicherweise unter 5 Vol.%, bezogen auf trockenes Gas. Das Gas kann nach ausreichender Kühlung und Auskondensieren von Wasserdampf bereits ohne weitere Umwandlung von Gasbestandteilen als Stadtgas verwendet werden.

Für bestimmte Stadtgasqualitäten mit einem oberen Heizwert von 4000 bis 5000 kcal pro $Nm^3$ wird das Verfahren so geführt, daß das Produktgas aus dem Reaktor mit Temperaturen von 580 bis 700°C abgezogen, gekühlt und, je nach gewünschter Stadtgasdichte, teilweise von Kohlendipxid befreit wird. Soll ein mit Erdgas austauschbares Gas mit einem Methangehalt von über 90 Vol.% (trocken gerechnet) erzeugt werden, so wird das heiße Produktgas der katalytischen Methanolspaltung auf 250 bis 350°C gekühlt und mit Wasserdampf an nickelhaltigem Katalysatormaterial in mindestens einer Methanisierungsstufe umgesetzt und dem methanisierten Gas das überschüssige Kohlendioxid ausgewaschen. Für die Methanisierung werden an sich bekannte Verfahrensbedingungen eingehalten.

Eine weitere erhebliche Verbesserung der katalytischen Umsetzung von Methanol mit Wasserdampf wird durch einen speziellen Katalysatortyp erreicht. Dieser Katalysatortyp weist einen Nickelgehalt von 25 bis 50 Gew.% auf und enthält zusätzlich Tonerdeschmelzzement. Der Gehalt an diesem Zement liegt bei etwa 5 bis 40 Gew.%. Neben diesen Hauptbestandteilen kann das Trägermaterial des Katalysators auch noch Zirkondioxid und/oder Titandioxid aufweisen. Ist einer der beiden oxidischen Bestandteile im Katalysator vorhanden, dann beträgt sein Anteil mindestens 5 Gew.%.

Eine erste Ausführungsform eines vorteilhaften Katalysators wird nachfolgend beschrieben. Dieser Katalysator enthält die Verbindungen $Ni_5MgAl_2O_9$ und $ZrO_2$ im Gewichtsverhältnis 13 : 1 und dazu einen Tonerdeschmelzzement, der 30 % des gesamten. Katalysatorgewichts ausmacht. (Zusammensetzung des Tonerdeschmelzzements in Gew.% : 26,4 CaO; 71,9 $Al_2O_3$; 0,2 $Fe_2O_3$; 0,2 MgO; 0,4 $Na_2O$; 0,07 $SiO_2$ und Spuren K, Cr, Cu, Mn, Ni sowie Pb). Die Herstellung dieser ersten Ausführungsform des vorteilhaften Katalysators geschieht wie folgt:

Zu der Suspension I wird innerhalb von 15 Minuten Lösung II hinzugefügt. Die Zusammensetzung der Suspension bzw. der Lösung ist folgende:

Suspension I : 1250 g Soda in 6 l Wasser mit 37,5 g $ZrO_2$
Lösung II : 250 g $Mg(NO_3)_2$ . 6 $H_2O$
1280 g $Ni(NO_3)_2$ . 6 $H_2O$
690 g $Al(NO_3)_3$ . 9 $H_2O$ in 6 l Wasser.

Der entstehende Niederschlag von $Ni_5Mg(OH)_{16}$ . $CO_3$ . 4$H_2O$ auf Zirkondioxid wird abfiltriert, alkalifrei gewaschen, 12 Stunden bei 110°C getrocknet und anschließend 4 Stunden lang bei 400°C kalziniert. Die dabei erhaltene Röstmasse enthält somit Nickeloxid und Magnesiumoxid, Aluminiumoxid und Zirkondioxid als Trägerbestandteile, 350 g der Röstmasse werden mit 150 g Tonerdeschmelzzement trocken gemischt, mit 60 g Wasser versetzt, zu 3 x 3 mm Tabletten verpreßt, im Anschluß daran kurz gewässert und zum vollständigen Abbinden noch 6 Tage lang bei 40°C in einem geschlossenen System in feuchtem Zustand aufbewahrt. Danach erreichen die Tabletten eine Stirndruckfestigkeit von 464 kg/cm$^2$ und ein Schüttgewicht von 1,57 kg/l. Der Nickelgehalt, bezogen auf den oxidischen Zustand, liegt bei 28,7 Gew.%. Vor seiner Verwendung wird der Katalysator noch reduziert, was mit Wasserstoff oder mit anderen reduzierenden Gasen geschehen kann.

Eine zweite Ausführungsform eines vorteilhaften Katalysators enthält die Verbindungen $Ni_5MgAl_2O_9$, $ZrO_2$ und $\lambda$-$Al_2O_3$ im Gewichtsverhältnis 12 : 1 : 2 und dazu den bereits erläuterten Tonerdeschmelzzement. Dieser Zement nimmt einen Anteil von 15% des gesamten Katalysatorgewichts ein. Diese zweite Katalysatorform wird auf folgende Weise hergestellt:

Die Lösungen I und II werden in der Suspension III bei einer Temperatur von 60°C kontinuierlich so vereinigt, daß der pH-Wert der Lösung nicht unter 8,5 abfällt. Die Zusammensetzung der Lösungen bzw. der Suspensionen ist folgende:

Lösung I: 1250 g Soda in 6 l Wasser

Lösung II: 255 g $Mg(NO_3)_2$ . $6H_2O$
1280 g $Ni(NO_3)_2$ . $6H_2O$
690 g $Al(NO_3)_3$ . $9H_2O$ in 6 l Wasser

Suspension III: 43,2 g Zirkondioxid und 74,0 g $-Al_2O_3$ in 3 l Wasser.

Der entstehende Niederschlag wird abfiltriert, gewaschen, der Filterkuchen 12 Stunden bei 110°C getrocknet und anschließend 4 Stunden bei 400°C kalziniert. 425 g der so hergestellten Röstmasse werden mit 75 g Tonerdeschmelzzement trocken gemischt, mit 75 g Wasser versetzt und zu 3 x 3 mm Tabletten verpreßt. Der fertige Katalysator wird kurz gewässert und dann 12 Stunden lang bei 110$^o$C getrocknet. Danach erreicht der Katalysator eine Stirndruckfestigkeit von 453 kg/cm$^2$ und ein Schüttgewicht von 1,52 kg/l. Der Nickelgehalt, bezogen auf den oxidischen Zustand, liegt bei 30,3 Gew.%. Vor der Verwendung wird der Katalysator noch reduziert.

Eine dritte Ausführungsform eines vorteilhaften Katalysators enthält die Verbindungen $Ni_6Al_2O_9$ und $TiO_2$ im Gewichtsverhältnis 7 : 2 und dazu Tonerdeschmelzzement (20 % des Katalysator-Gesamtgewichts). Die Herstellung geschieht folgendermaßen:

Zunächst werden wir Lösungen I und II sowie die Suspension III zubereitet. Ihre Bestandteile sind folgende:

Lösung  I:      1909 g Soda in 6 l Wasser

Lösung II:      1745 g $Ni(NO_3)_2 \cdot 6H_2O$
                750 g $Al(NO_3)_2 \cdot 9H_2O$ in 6 l Wasser

Suspension III:  57 g $TiO_2$ in 3 l Wasser.

In der Suspension III werden bei 60$^o$C und einem pH-Wert von nicht kleiner als 8 die Lösungen I und II vereinigt. Der entstehende Niederschlag wird abfiltriert, alkalifrei gewaschen, bei 110$^o$C 12 Stunden lang getrocknet und anschließend 4 Stunden bei 400$^o$C kalziniert.

400 g der so hergestellten Röstmasse werden mit 100 g Tonerdeschmelzzement trocken gemischt, mit 150 g Wasser versetzt und danach zu 3 x 3 mm Tabletten verpreßt. Die Tabletten werden kurz gewässert und 12 Stunden bei 110$^o$C behandelt. Danach erreicht der Katalysator eine Stirndruckfestigkeit von 463 kp/cm$^2$ und ein Schüttgewicht von 1,53 kg/l. Der Nickelgehalt, bezogen auf den oxidischen Zustand, liegt bei 41.3 Gew.%. Eine Reduktion schließt sich an.

0003737

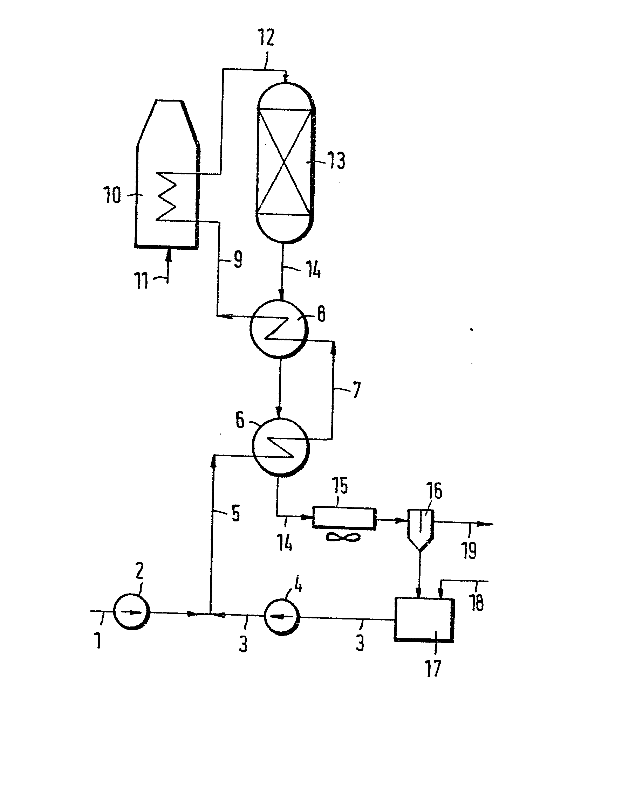

Die Zeichnung zeigt ein Schaltungsbeispiel für das Verfahren.

Das zu spaltende Methanol wird in der Leitung 1 herangeführt und durch die Pumpe 2 verdichtet. Das Methanol wird mit Wasser aus der Leitung 3 gemischt; das Wasser wird mit Hilfe der Pumpe 4 herangefördert. Das flüssige Gemisch aus Methanol und Wasser strömt in der Leitung 5 zunächst zu einem Vorwärmer 6. Vom Vorwärmer 6 gelangt das Gemisch in der Leitung 7 zu einem Verdampfer 8 und dann in der Leitung 9 zu einem gefeuerten Erhitzer 10, in welchem die restliche Verdampfung und die Überhitzung des Gemisches erfolgt. Dem Erhitzer wird Brennstoff durch die Leitung 11, z.B. Gas, Heizöl oder Methanol, zugeführt.

Das auf Temperaturen von 300 bis 500°C erhitzte, aus Methanoldampf und Wasserdampf bestehende Gemisch wird in der Leitung 12 der katalytischen Umsetzung im Reaktor 13 zugeführt. Es ist vorteilhaft, bei einem Wasserdampf/Methanol-Gewichtsverhältnis von etwa 1,0 die Erhitzungstemperatur des Einsatzgemisches höchstens auf 460°C zu bringen, um Rußbildung im gefeuerten Erhitzer 10 zu vermeiden. Durch einen etwas höheren Wasserdampfgehalt kann diese Rußbildung unterdrückt und damit eine etwas höhere Erhitzungstemperatur ermöglicht werden.

Im Reaktor 13 ist körniges nickelhaltiges Katalysatormaterial bevorzugt im Festbett angeordnet. Beim Durchgang des Einsatzgemisches durch diesen Katalysator entsteht ein Produktgas, das vor allem Wasserstoff, Methan und Kohlenoxide enthält. Das Produktgas verläßt den Reaktor 13 durch die Leitung 14 und gibt seine fühlbare Wärme in Stufen zunächst im Versampfer 8, dann im Vorwärmer 6 und schließlich in einem Luftkühler 15 ab. Dabei kondensiert Wasserdampf aus, der im Abscheider 16 aufgefangen und zu einem Vorratsbehälter 17 geleitet wird. Sollte das Kondensat aus dem Abscheider 16 den Wasserbedarf zur Erzeugung des Methanol-Wasser-Gemisches nicht ganz decken können, wird dem Behälter 17 noch Speisewasser durch die Leitung 18 zugeführt. Wie bereits erläutert, wird in der Leitung 3 Wasser

0003737

aus dem Behälter 17 mit Hilfe der Pumpe 4 abgezogen. Das Produktgas steht in der Leitung 19 zur Verfügung.

Falls erforderlich, kann in die Leitung 5 noch ein Feststoffilter eingesetzt sein, womit Feststoffe in dem Gemisch zurückgehalten werden, die vom Kondensat des Abscheiders 16 stammen. In der Zeichnung ist dieses Feststoffilter nicht berücksichtigt.

B e i s p i e l :

In einer der Zeichnung entsprechenden Verfahrensführung werden unter einem Druck von 25 bar pro Stunde 1000 kg Methanol aus der Leitung 1 und 1000 kg Wasser aus der Leitung 3 gemischt, im Vorwärmer 6 auf 185°C erwärmt, im Verdampfer 8 auf 190°C erhitzt und im gefeuerten Erhitzer 10 auf eine Temperatur von 450°C gebracht.

Der Reaktor 13 enthält 1 m$^3$ eines körnigen Katalysatormaterials mit einer Korngröße von 5 mm. In der Leitung 14 verläßt ein Produktgas in einer Menge von 2208 Nm$^3$/h mit einer Temperatur von 620°C und folgender Zusammensetzung den Reaktor 13:

| | | | |
|---|---|---|---|
| $CO_2$ | = | 12,8 | Vol.% |
| $CO$ | = | 2,3 | " |
| $H_2$ | = | 26,0 | " |
| $CH_4$ | = | 16,6 | " |
| $H_2O$ | = | 42,3 | " |

Dieses Produktgas wird im Verdampfer 8, im Vorwärmer 6 und im Luftkühler 15 schließlich bis auf 40°C gekühlt. Pro Stunde fallen im Abscheider 16 etwa 1100 kg Kondensat an, die dem Behälter 17 zugeführt werden. Das Produktgas in der Leitung 19 besitzt einen oberen Heizwert (Brennwert) von 17600 kJ/Nm$^3$, es hat einen Druck von 12 bar und kann direkt als Stadtgas verwendet werden.

## PATENTANSPRÜCHE

1. Verfahren zur Erzeugung eines methanhaltigen Heizgases durch Umsetzung von verdampftem Methanol mit Wasserdampf unter einem Druck von 10 bis 50 bar in mindestens einem Reaktor, der einen nickelhaltigen Katalysator enthält, bei Eintrittstemperaturen von 300 bis 500°C und Austrittstemperaturen des Produktgases von 500 bis 700°C, dadurch gekennzeichnet, daß Wasser und flüssiges Methanol im Gewichtsverhältnis von 0,5 bis 1,5 gemischt werden und das Gemisch erhitzt, verdampft und dem Reaktor als Einsatzmaterial zugeführt wird.

2. Verfahren nach Anspruch 1, dadurch gekennzeichnet, daß das Produktgas gekühlt und dabei gebildetes Kondensat zur Erzeugung des Gemisches aus Wasser und flüssigem Methanol verwendet wird.

3. Verfahren nach Anspruch 1 oder 2, dadurch gekennzeichnet, daß der Katalysator einen Nickelgehalt von 25 bis 50 Gew.%, mindestens 5 Gew.% Tonerdeschmelzzement und mindestens 5 Gew.% Zirkondioxid oder Titandioxid aufweist.

1/1

Europäisches
Patentamt

EUROPÄISCHER RECHERCHENBERICHT

0003737

Nummer der Anmeldung

EP 78 20 0339

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| DP | DE - A - 2 641 113 (METALLGESELL-SCHAFT)<br><br>* Ansprüche; Seite 7; Seite 8, Zeilen 1-5; Figur * | 1-3 |
| A | FR - A - 2 319 603 (ENGELHARD MINERALS & CHEMICALS CORP.)<br><br>* Seiten 6-11; Ansprüche; Figur * | 1,2 |
| A | DE - A - 2 341 288 (METALLGESELL-SCHAFT)<br><br>* Seiten 4-6 * | 1 |

**KLASSIFIKATION DER ANMELDUNG (Int Cl²)**

C 10 L 3/00
C 07 C 1/20
9/04 //
B 01 J 23/74
C 01 B 2/02

**RECHERCHIERTE SACHGEBIETE (Int Cl²)**

C 07 C 1/20
9/04
C 01 B 2/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16-05-1979 | VAN GEYT |

EPA form 1503.1  06.78